# EUROPÄISCHE PATENTSCHRIFT

(11) **EP 0 700 749 B1**
(45) Veröffentlichungstag und Bekanntmachung des Hinweises auf die Patenterteilung: **15.03.2000**
(21) Anmeldenummer: 95113364.4
(22) Anmeldetag: 25.08.1995
(51) Int. Cl.: B23P 19/00, B23Q 16/12, B25H 7/00, E06B 3/96, B21D 43/00

(54) **Positioniermaschine zum Anordnen eines Verbinders**
Positioning machine for placing a connecting piece
Machine de positionnement pour le placement d'une pièce de connection

(30) Priorität: 02.09.1994 DE 4431235
(43) Veröffentlichungstag der Anmeldung: 13.03.1996
(73) Patentinhaber: SCHÜCO International KG, 33609 Bielefeld (DE)
(72) Erfinder: de Man, Gerardus, D-33775 Versmold (DE); Höcker, Eitel-Friedrich, D-33739 Bielefeld (DE)
(74) Vertreter: Stracke, Alexander, Dipl.-Ing.

(56) Entgegenhaltungen:
- EP-A- 0 055 201
- EP-A- 0 551 576
- DE-A- 3 823 941
- DE-A- 4 140 428
- FR-A- 2 087 555
- PATENT ABSTRACTS OF JAPAN vol. 9 no. 55 (M-362) ,9.März 1985 & JP-A-59 189082 (MAZDA) 26.Oktober 1984,
- PATENT ABSTRACTS OF JAPAN vol. 15 no. 143 (M-143) ,11.April 1991 & JP-A-03 020913 (FURUKAWA ELECTRIC CO LTD ) 29.Januar 1991,

## Beschreibung

Die Erfindung betrifft eine Positioniermaschine zum Anordnen eines Verbinders gemäß der im Oberbegriff des Patentanspruches 1 angegebenen Art.

Beispielsweise im Fenster und Fassadenbau müssen Profile miteinander verbunden werden. Dies geschieht in der Regel mit sog. Verbindern, insbesondere T-Verbindern, die in eine Nut eines Profils (z.B. Rahmenprofil) eingreifen. Das auf den Verbinder aufzuschiebende weitere Profil (z.B. Rahmenprofil) weist eine dem Verbinder angepaßte Ausnehmung (Profilierung / Hohlkammer) auf. Nach Aufschieben des weiteren Profils auf den Verbinder wird dieser in der Regel mit dem Verbinder durch mechanische Mittel und Verkleben fixiert. Insbesondere, wenn an ein Profil mehrere weitere Profile über solche Verbinder angeschlossen werden sollen, ist eine exakte Montage erforderlich, da sich in diesem Fall die Toleranzen auf den Abstand der Sprossenprofile auswirken können, insbesondere wenn ein Flügelrahmen in diesem Bereich angeordnet wird.

Aus diesem Grunde wurde von den Metallbauern in der Vergangenheit eine Positioniermaschine entwickelt, die einen Maschinentisch aufweist, auf den ein Profil mit Nuten gelegt wird. Das Profil wird dabei an einen Anschlag des Maschinentisches angelegt, der als Bezugsposition für die Steuerung der in einem linear verschiebbaren Gehäuse gelagerten Greifmittel dient. Mit den Greifmitteln wird der in den Nuten des Profils verschiebbare Verbinder in eine vorbestimmte Position bewegt, indem zunächst der Verbinder von Hand grob zwischen den Greifmitteln angeordnet wird. Anschließend bewegen sich die Greifmittel aufeinander zu, so daß der Verbinder von diesen in die vorbestimmte Position gedrückt wird. Die vorbestimmte Position ist dabei in der Regel mittig zwischen den beiden zunächst beabstandet angeordneten Greifmitteln der Positioniermaschine.

Seit kurzer Zeit werden diese Verbinder, insbesondere T-Verbinder zweiteilig ausgeführt und mit einer Dichtung versehen. Dabei wird zunächst in einen Nutbereich eine Dichtmasse eingespritzt, auf die dann das Dichtkissen aufgesetzt wird. Die Dichtmasse und das Dichtkissen bilden zusammen eine Dichtung mit dem anschließend auf das Dichtkissen aufgebrachten Verbinder und dem auf diesen aufgeschobenen weiteren Profil. Eine Dichtwirkung ist dabei lediglich im Randbereich des Verbinders erforderlich, so daß kein Wasser von außen zwischen den Verbinder und in das Profil bzw. in das mit dem Verbinder zu befestigende weitere Profil eindringen kann.

Nun müssen selbstverständlich das Dichtkissen und die Dichtmasse in einer exakt vorbestimmten Position angeordnet werden. Dafür ist es z. Zt. üblich, ausgehend von dem Anschlag des Maschinentisches der Positioniermaschine eine Schablone anzulegen und mit Anlegen der Schablone die Dichtmasse einzuspritzen und das Dichtkissen einzubringen oder gegebenenfalls das Profil per Hand zu markieren. Insbesondere der letzte Verfahrensschritt hat den Nachteil, daß das Profil beschädigt wird, was bei Fassaden oder Fenstern nicht erwünscht ist, da dadurch der optische Gesamteindruck des Fensters bzw. der Fassade gestört wird. Das Einbringen der Dichtmasse und des Dichtkissens mit angelegter Schablone hat zudem den Nachteil, daß es sehr aufwendig und zeitintensiv ist. Des weiteren wird der Arbeitsbereich durch die Schablone beeinträchtigt. Weiterhin sind die Greifmittel im Bereich der einzubringenden Dichtmasse bzw. des Dichtkissens störend, so daß diese auf alle Fälle immer aus diesem Bereich verfahren werden müssen, um ein ungestörtes Einbringen der Dichtmasse und des Dichtkissens zu ermöglichen.

Es ist außerdem bekannt, durch Lichtstrahlen, insbesondere durch Laserstrahlen Markierungen auf Werkstücke aufzubringen, ohne daß diese beschädigt werden. So ist es beispielsweise aus der JP-A-03 020 913 bekannt, auf langgestreckte Bauteile durch Lichtstrahlen Markierungen aufzubringen. Dazu sind zwei Laserstrahlen sendende Lichtquellen im Abstand zueinander angeordnet. Die Markierungen werden jedoch dann von Hand bleibend und sichtbar auf das Werkstück aufgebracht.

Aus der DE 41 40 428 A 1 ist es bekannt, in einer Stanze oder einer Presse zu bearbeitende Bleche mittels eines Lichtstrahles auszurichten. Die Lichtquelle wird an der Stanze befestigt und so ausgerichtet, daß der Lichtstrahl auf einen markanten Punkt des eingelegten Werkstückes fällt. Der Lichtstrahl ist so gebündelt oder fokussiert, daß auf dem eingelegten Werkstück ein Punkt oder ein Fadenkreuz reflektiert wird, welches mit einer Markierung auf dem Werkstück in Deckung gebracht wird. Dadurch ist es nicht notwendig, Zahlenwerte umzusetzen.

Ausgehend von der in der Praxis beim Bau von Fenstern, Türen und Fassaden eingesetzten Positioniermaschine liegt der Erfindung die Aufgabe zugrunde, die Positioniermaschine gemäß der im Patentanspruch 1 angegebenen Art dahingehend weiterzubilden, daß eine vereinfachte und schnelle Montage ermöglicht wird.

Diese Aufgabe wird durch die kennzeichnenden Merkmale des Anspruchs 1 in Verbindung mit seinen Oberbegriffsmerkmalen gelöst. Damit entfällt nunmehr das umständliche Anlegen einer Schablone. Vielmehr kennzeichnet die Markiereinrichtung der Positioniermaschine den vorbestimmten Bereich des Profils, so daß ohne weiteres in diesem Bereich die Dichtmittel eingebracht werden können. Der Einfachheit halber handelt es sich bei der Kennzeichnung des vorbestimmten Bereichs um eine optische Markierung, wobei zwei Lichtquellen, wie Laser, einen Teil der Markiereinrichtung bilden und die Markierung erzeugen.

Damit die Markierung für unterschiedliche Verbinder auf einfache Weise erzeugt werden kann, ist der Lichtquelle eine in vorbestimmter Weise verstellbare Optik vorgeschaltet. Um die beiden Lichtquellen einstellen zu können, ist vorzugsweise ein manuelles Betätigungsmittel vorgesehen. Damit sich der markierte Bereich während des Bearbeitens des Profils nicht verändert, sind die Lichtquellen feststellbar ausgebildet. Eine schnelle Einstellung der Lichtquellen wird dadurch erreicht, daß feste Einstellpositionen für die Lichtquellen vorgesehen sind.

Beim Einbringen des Verbinders in die Nut eines Profils und mit dem anschließenden Anordnen des Verbinders in der jeweiligen vorbestimmten Position muß der Verbinder zunächst in den Bereich der Greifmittel der Positioniermaschine angeordnet werden, damit diese dann den Verbinder in die vorbestimmte Position bewegen können. Aus diesem Grunde ist es günstig, wenn eine zweite Markiereinrichtung vorgesehen ist, die einen die vorbestimmte Position umgebenden Bereich markiert. Diese zweite Markierung wird aber insbesondere von den Greifmitteln gebildet, die den zu markierenden weiteren Bereich begrenzen. Der Verbinder wird nunmehr ungefähr zwischen die Greifmittel eingebracht und anschließend von den Greifmitteln in die vorbestimmte Position bewegt.

Da auf der einen Seite Verbinder mit unterschiedlich ausgebildeten Seitenkonturen vorhanden sind und auf der anderen Seite die Verbinder möglichst genau in ihre vorbestimmte Position bewegt werden müssen, ist es von Vorteil, daß die Greifmittel mit auswechselbaren, an den jeweiligen Verbinder angepaßten Backen versehen sind, die vor allem mittels eines Schnellwechselsystems einfach auswechselbar sind.

Zum Bewegen der Lichtquellen ist insbesondere ein manuelles Betätigungsmittel vorgesehen.

Damit sich der markierte Bereich während des Bearbeitens des Profils nicht verändert, sind die Lichtquellen feststellbar ausgebildet.

Eine schnelle Einstellung der Lichtquellen wird dadurch erreicht, daß feste Einstellpositionen für die Lichtquelle vorgegeben sind.

Beim Einbringen des Verbinders in die Nut eines Profils und mit dem anschließenden Anordnen des Verbinders in der jeweiligen vorbestimmten Position muß der Verbinder zunächst in den Bereich der Greifmittel der Positioniermaschine angeordnet werden, damit diese dann den Verbinder in die vorbestimmte Position bewegen können. Aus diesem Grunde ist es günstig, wenn eine zweite Markiereinrichtung vorgesehen ist, die einen die vorbestimmte Position umgebenden Bereich markiert. Diese zweite Markierung wird dabei insbesondere von den Greifmitteln gebildet, die den zu markierenden weiteren Bereich begrenzen. Der Verbinder wird nunmehr ungefähr zwischen die Greifmittel eingebracht und anschließend von den Greifmitteln in die vorbestimmte Position bewegt.

Da auf der einen Seite Verbinder mit unterschiedlich ausgebildeten Seitenkonturen vorhanden sind und auf der anderen Seite die Verbinder möglichst genau in ihre vorbestimmte Position bewegt werden müssen, ist es von Vorteil, daß die Greifmittel mit auswechselbaren, an den jeweiligen Verbinder angepaßten Backen versehen sind, die vor allem mittels eines Schnellwechselsystems einfach auswechselbar sind.

Weitere Vorteile und Merkmale ergeben sich aus der folgenden Beschreibung einer Ausührungsform der Erfindung im Zusammenhang mit der Zeichnung. Es zeigen:
- Figur 1: eine perspektivische Ansicht eines Teils der Positioniermaschine nach der Erfindung;
- Figur 2 bis 5: jeweils eine schematische Darstellung der Arbeitsweise der Positioniermaschine nach der Erfindung;
- Figur 6: eine Vorderansicht des Greifmittels der Positioniermaschine;
- Figur 7: eine Seitenansicht von Figur 6;
- Figur 8: eine Vorderansicht der Markiereinrichtung der Positioniermaschine; und
- Figur 9: eine Schnittdarstellung entlang der Linie IX - IX von Figur 8.

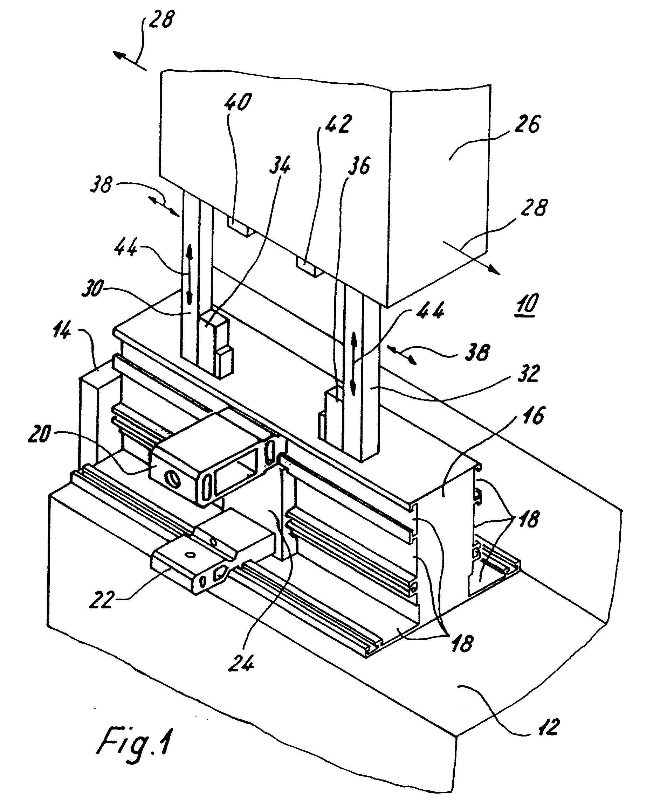

In der Figur 1 ist ein Teil der Positioniermaschine 10 dargestellt. Sie weist einen Maschinentisch 12 mit einem Anschlag 14 auf, auf dem ein zu bearbeitendes Profil 16 mit Nuten 18 angeordnet ist. Bei dem Profil 16 handelt es sich um eine im Querschnitt T-förmige Ausführung.

Wie der Figur 1 zu entnehmen ist, sind an dem Profil 16 bereits zwei T-Verbinder 20 und 22 übereinander angeordnet. Zwischen den zwei T-Verbindern 20 und 22 ist in zwei benachbarten Nuten 18 ein Dichtkissen 24 eingebracht. Die T-Verbinder 20 und 22 greifen jeweils in eine Nut 18 ein, wie deutlich der Figur 1 zu entnehmen ist. Der in bezug auf Figur 1 untere T-Verbinder 22 ist auf dem Dichtkissen 24 angeordnet, wohingegen der obere T-Verbinder 20 seitlich von dem Dichtkissen 24 angeordnet ist.

Oberhalb des Profils 16 ist ein Gehäuse 26 der Positioniermaschine 10 gelagert. Das Gehäuse 26 ist linear und parallel zum Maschinentisch 12 verschiebbar, was durch die Bewegungspfeile 28 angedeutet ist.

Nach unten ragen aus dem Gehäuse 26 zwei Greiffinger 30 und 32 heraus, die an ihren aufeinander zuweisenden Seiten Backen 34 und 36 aufweisen. Die Backen 34 und 36 sind über ein Schnellwechselsystem von ihrem zugeordneten Greiffinger 30 bzw. 32 lösbar, wie weiter unten noch im einzelnen erläutert wird.

Die Greiffinger 30, 32 sind gleichmäßig entsprechend den Pfeilen 38 aufeinander zu sowie voneinander weg bewegbar. Über die Greiffinger 30 und 32, genauer gesagt über die Backen 34 und 36 werden die T-Verbinder 20 und 22 in ihre vorbestimmte Position gedrückt. In der Figur 1 sind die T-Verbinder 20 und 22 bereits in ihrer vorbestimmten Position angeordnet.

Das Profil 16 liegt an dem Anschlag 14 an. Der Anschlag 14 bildet für die Steuereinrichtung des linear verschiebbaren Gehäuses 26 und der parallel dazu bewegbaren Greiffinger 30 und 32 einen Bezugspunkt. Ausgehend von diesem Bezugspunkt wird die vorbestimmte Position von der Steuereinrichtung der Positioniermaschine 10 eingestellt.

In dem Gehäuse 26 sind auf der dem Profil 16 zugewandten Seite zwei Laser 40 und 42 mit vorgeschalteter Optik angeordnet. Die Laser 40 und 42 bilden eine Markiereinrichtung, durch die auf dem Profil 16 eine optische Markierung aufgebracht wird. Die den Lasern 40 und 42 vorgeschaltete Optik streut das Laserlicht derart, daß auf dem Profil 16 jeweils ein dünner Laserlichtstrich erscheint. Diese Markierung ist für die Montage des Dichtkissens 24 hilfreich, wie sich aus dem folgenden ergibt.

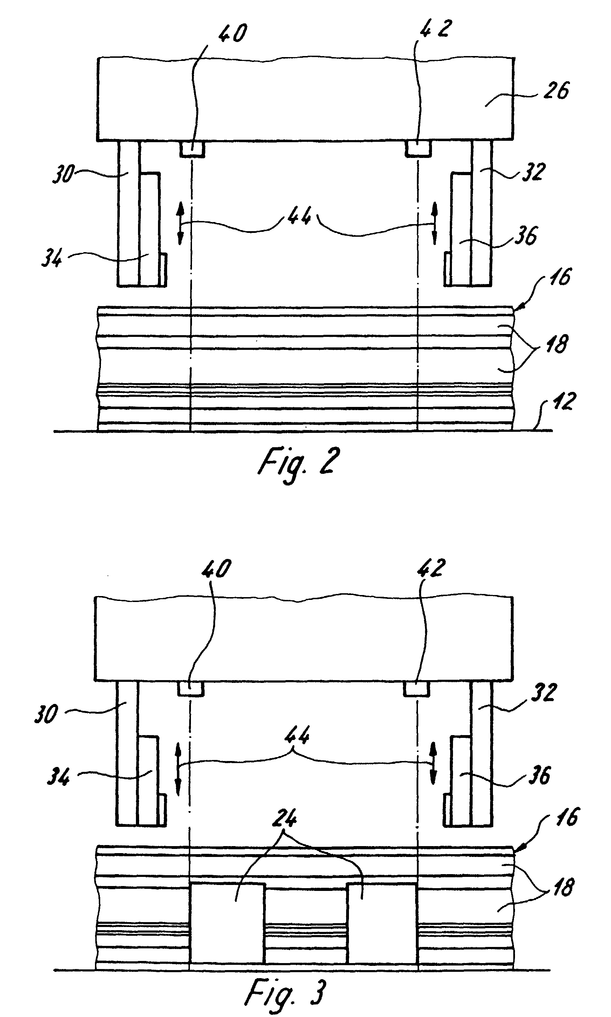

Eine Montage von jeweils zwei T-Verbindern 20 und 22 mit zwei Dichtkissen 24 ist in den Figuren 2 bis 5 dargestellt. Anhand dieser Figuren wird die Arbeitsweise der Positioniermaschine 10 mit den Lasern 40 und 42 veranschaulicht. Die Greiffinger 30 und 32 mit ihren Backen 34 und 36 bilden ebenfalls eine Markiereinrichtung, die den vorbestimmten Bereich, der von den Lasern 40 und 42 gekennzeichnet wird, umgeben.

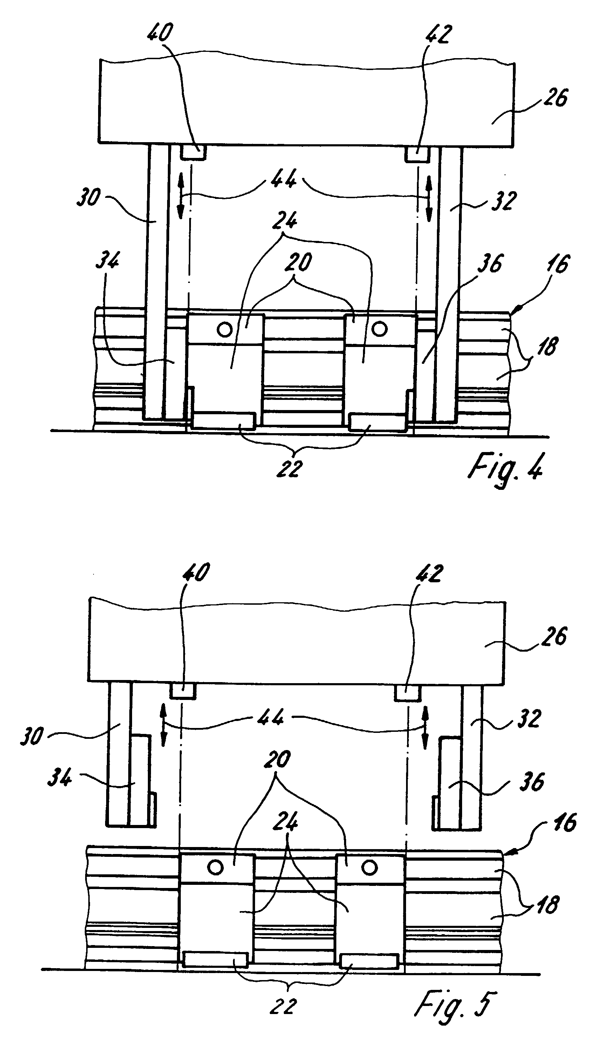

Bei der Montage der beiden T-Verbinder 20 und 22 werden zunächst die Greiffinger 30 und 32 zusammen mit dem Gehäuse 26 in Position verfahren. Ebenso werden die Laser 40, 42 in ihre vorbestimmte Position bewegt, so daß sie den Bereich entsprechend der strichpunktierten Linie auf dem Profil 16 in den Figuren 2 bis 5 markieren. Die Laser 40, 42 werfen dann einen Laserlichtstreifen auf das Profil 16. Der Monteur weiß somit, daß der Laserlichtstreifen jeweils den Rand bildet, an den sich das Dichtkissen 24 jeweils anschließt. Mit dieser optischen Kennzeichnung des Profils 16 werden dann entsprechend Figur 3 die Dichtkissen 24 eingelegt. Anschließend werden die T-Verbinder 20 und 22 grob zwischen die beiden Greiffinger 30 und 32 gedrückt. Die Greiffinger 30 und 32 werden nach unten in Richtung auf das Profil 16 verfahren. Diese Bewegung ist mit den Bewegungspfeilen 44 angedeutet. Sind die Backen 34 nach unten verfahren, werden sie gleichmäßig aufeinander zu bewegt. Die T-Verbinder 20, 22 werden dann in ihre vorbestimmte Position gedrückt und zunächst in dieser von den Greiffingern 30, 32, s. Figur 4 gehalten.

Die T-Verbinder 20 und/oder 22 können nunmehr in dieser durch die Greiffinger 30, 32 festgelegten, gespannten Position festgeschraubt werden. Werden dabei beispielsweise selbstschneidende Schrauben verwendet, die den T-Verbinder 20 bzw. 22 mit Querkräften belasten, bleibt dieser in vorteilhafter Weise dann trotzdem in der vorbestimmten Position auf dem Profil 16.

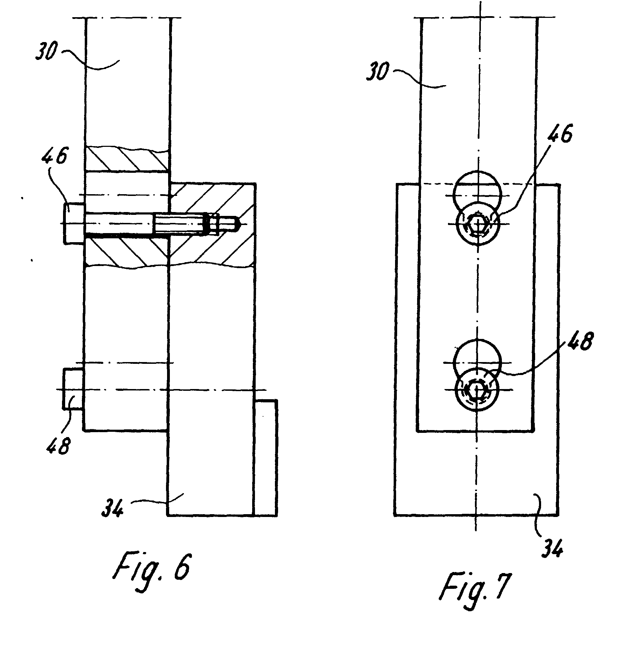

Anschließend werden die Greiffinger 30, 32 wieder leicht nach außen verfahren und bewegen sich entsprechend den Bewegungspfeilen 44 nach oben, s. Figur 5. Ein weiteres, hier nicht dargestelltes Profil wird dann mit einer den T-Verbindern 20, 22 angepaßten stirnseitigen Ausnehmung kann auf die T-Verbinder 20, 22 geschoben und mit diesen verbunden werden.

Da die T-Verbinder 20 und 22 jeweils unterschiedliche Breiten und unterschiedlich vorbestimmte Positionen in bezug auf das Profil 16 einnehmen, sind die Backen 34 und 36 gestuft ausgebildet. Somit können die T-Verbinder 20 und 22 in bezug auf den Randbereich des Dichtkissens 24 unterschiedlich angeordnet werden.

Bevor das Dichtkissen 24 eingebracht wird, kann der entsprechende Bereich, den das Dichtkissen 24 einnimmt, zuvor noch mit einer Dichtmasse ausgespritzt werden. Auch hierbei dienen die durch die Laser 40 und 42 erzeugte Streifenmarkierugen als Kennzeichnung für den Monteur, damit dieser nicht über die Markierung hinaus Dichtmasse auf das Profil 16 aufbringt. Dies würde den optischen Gesamteindruck des montierten Profils, beispielsweise eines Fensters, stören.

Durch diese einfache Maßnahme wird die Montage von T-Verbindern und ihren Dichtmassen und Dichtkissen 24 erheblich vereinfacht. Das Laserlicht hat dabei den Vorteil, daß es das Profil 16 nicht beschädigt.

Sind die T-Verbinder 20 und 22 montiert, verfährt das Gehäuse 26 an eine weitere vorbestimmte Stelle zur Montage weiterer T-Verbinder 20 und 22 in der eben beschriebenen Art und Weise.

In der Figur 6 und 7 sind zwei Ansichten des Greiffingers 30 mit der Backe 34 dargestellt. Daraus geht hervor, daß die Backe 34 zwei fest angeordnete Schrauben 46 und 48 aufweist, die jeweils in eine Gewindebohrung in der Backe 34 eingreifen. Der Greiffinger 30 weist zwei Bohrungen dicht untereinander auf, wobei die beiden Bohrungen sich teilweise überschneiden, wie der Figur 7 zu entnehmen ist.

Die obere größere Bohrung entspricht im wesentlichen dem Durchmesser des Schraubenkopfes 46 beziehungsweise 48. Die untere Bohrung entspricht im wesentlichen dem Durchmesser des Schraubenstiftes der Schraube 46 bzw. 48. Dadurch ist es möglich, durch Nachobendrücken der Backe 34, die Schraubenköpfe der Schrauben 46 und 48 mit der jeweiligen oberen Bohrung zu zentrieren, so daß diese durch die jeweilige Bohrung geführt werden können.

Ist die Backe 34, 36 in der unteren Position, wie in Figur 6 dargestellt ist, blockiert der Schraubenkopf ein Lösen der Backe 34. Somit ist ein einfacher Schnellverschluß geschaffen, mit dem auf einfache Weise die Backen 34, 36 entsprechend den Seitenkonturen der beiden T-Verbinder 20 und 22 durch Auswechseln angepaßt werden können.

Die weitere Backe 36 mit dem Greiffinger 32 ist entsprechend spiegelverkehrt ausgebildet und angeordnet.

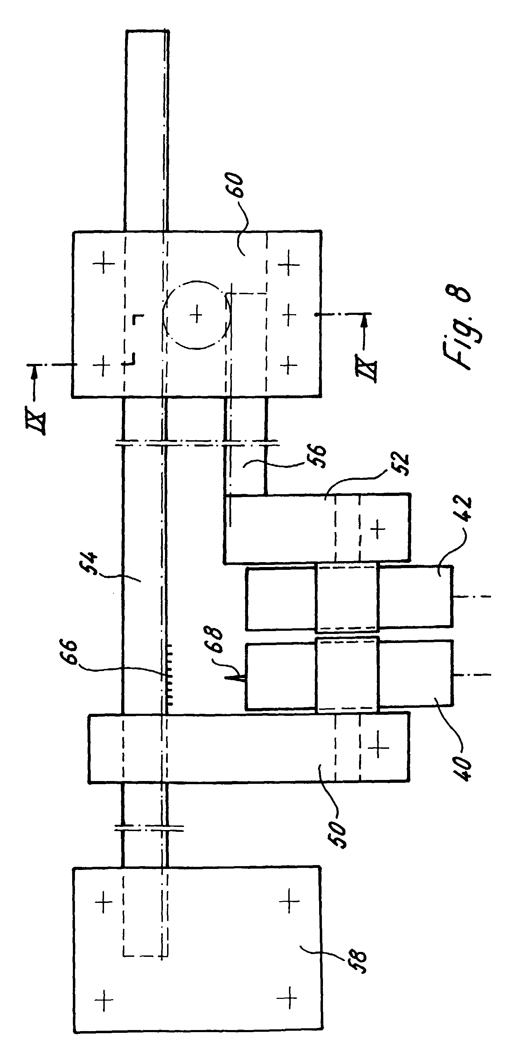

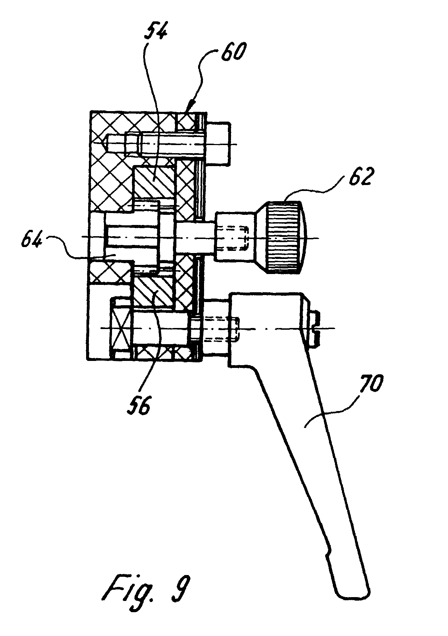

Anhand der Figuren 8 und 9 wird der Verstellmechanismus der beiden Laser 40 und 42 verdeutlicht. Die beiden Laser 40 und 42 sind jeweils über einen Halter 50, beziehungsweise 52 mit einer Zahnstange 54 beziehungsweise 56 verbunden. Die Zahnstangen 54 und 56 sind in dem Gehäuse 26 gelagert, wobei dafür jeweils eine Lagereinrichtung 58 und 60 vorgesehen ist.

In der Lagereinrichtung 60 werden über ein Betätigungsmittel in Form einer gerändelten Einstellschraube 62, die mit einem Ritzel 64 versehen ist, die beiden Zahnstangen 54 und 56 gleichmäßig bewegt. Das Ritzel 64 greift nämlich in beide Zahnstangen 54 und 56 ein. Dafür ist das Ritzel 64 zwischen den Zahnstangen 54 und 56 angeordnet.

Mit Drehen der Einstellschraube 62 werden somit die Zahnstangen 54 und 56 mit den Haltern 50 und 52 und den Lasern 40 und 42 bewegt und zwar derart, daß sich die Laser 40 und 42 gleichmäßig aufeinander zu beziehungsweise voneinander weg bewegen. Damit die Bedienperson einfach den Abstand der Laser 40 und 42 zueinander und somit auf einfache Weise den vorbestimmten Bereich, der über das Laserlicht zu markieren ist, einstellen kann, sind im Gehäuse 26 Kennzeichnungen für die jeweiligen T-Verbinder und somit für die jeweiligen vorbestimmten Bereiche vorgesehen. Diese Kennzeichnung ist mit dem Bezugszeichen 66 in Figur 8 versehen. Dafür weist zumindest ein Laser 40 einen Zeiger 68 auf, der entsprechend auf die Kennzeichnung 66 zeigt und der Bedienperson die Einstellung erleichtert. Über einen Feststellhebel 70, der mit Verdrehen die untere Zahnstange 56 blockiert, sind die Laser 40 und 42 schließlich feststellbar.

### Bezugszeichenliste

- 10: Positioniermaschine
- 12: Maschinentisch
- 14: Anschlag
- 16: Profil
- 18: Nuten
- 20: T-Verbinder - oben
- 22: T-Verbinder - unten
- 24: Dichtkissen
- 26: Gehäuse
- 28: Pfeil
- 30: Greiffinger - links
- 32: Greiffinger - rechts
- 34: Backen - links
- 36: Backen - rechts
- 38: Pfeil
- 40: Laser
- 42: Laser
- 44: Pfeil
- 46: Schraube - oben
- 48: Schraube - unten
- 50: Halter - links
- 52: Halter - rechts
- 54: Zahnstange - oben
- 56: Zahnstange - unten
- 58: Lagereinrichtung - links
- 60: Lagereinrichtung - rechts
- 62: Einstellschraube
- 64: Ritzel
- 66: Kennzeichnung
- 68: Zeiger
- 70: Feststellhebel

## Patentansprüche

1. Positioniermaschine (10) zum Anordnen zumindest eines Verbinders (20, 22) in einer vorbestimmten Position an einem Profil (16), mit einem linear verschiebbaren Gehäuse (26), in dem vorzugsweise zwei den Verbinder (20, 22) in seine vorbestimmte Position bewegende Greifmittel (30, 32, 34, 36) gelagert sind, einem Anschlag (14) für das Profil (16), der als Bezugsposition für die Steuerung zur Anordnung des Verbinders (20, 22) in der vorbestimmten Position dient, eine **dadurch gekennzeichnet,** daß Markiereinrichtung (40, 42) vorgesehen ist, die zumindest einen vorbestimmten Bereich des Profils (16) markiert, wobei die Markiereinrichtung an dem Gehäuse (26) angeordnet ist und zwei Lichtquellen (40, 42) aufweist, die zum Einstellen des markierten Bereichs durch ein Betätigungsmittel gleichmäßig aufeinander zu und voneinander weg bewegbar sind.

2. Positioniermaschine nach Anspruch 1, **dadurch gekennzeichnet,** daß ein manuelles Betätigungsmittel (62) zum Bewegen der Lichtquellen (40, 42) vorgesehen ist.

3. Positioniermaschine nach Anspruch 1 oder 2, **dadurch gekennzeichnet,** daß die Lichtquellen (40, 42) feststellbar sind.

4. Positioniermaschine nach einem der Ansprüche 1 bis 3, **dadurch gekennzeichnet,** daß feste Einstellpositionen für die Lichtquellen (40, 42) vorgegeben sind.

5. Positioniermaschine nach einem der vorangehenden Ansprüche 1 bis 4, **dadurch gekennzeichnet,** daß eine zweite Markiereinrichtung (30, 32) vorgesehen ist, die einen die vorbestimmte Position umgebenden Bereich markiert.

6. **Positioniermaschine nach Anspruch 5, dadurch gekennzeichnet,** daß die zweite Markiereinrichtung durch die Greifmittel (30, 32, 34, 36) gebildet ist, die den zu markierenden Bereich begrenzen.

7. Positioniermaschine nach einem der vorangehenden Ansprüche 1 bis 6, **dadurch gekennzeichnet,** daß die Greifmittel (30, 32) mit auswechselbaren Backen (34, 36) versehen sind.

8. Positioniermaschine nach Anspruch 7, **dadurch gekennzeichnet,** daß die Backen (34, 36) mittels eines Schnellwechselsystems auswechselbar sind.

9. Positioniermaschine nach einem der vorangehenden Ansprüche 1 bis 8, **dadurch gekennzeichnet,** daß die Greifmittel (30, 32, 34, 36) zumindest bereichsweise der Kontur des Verbinders (20, 22) angepaßt sind.

## Claims

1. A positioning machine (10) for arranging at least one connector (20, 22) in a predetermined position on a shaped member (16), comprising a linearly displaceable housing (26) in which there are mounted preferably two gripping means (30, 32, 34, 36) for moving the connector (20, 22) into its predetermined position, and a stop (14) for the shaped member (16), which serves as a reference position for the control for arranging the connector (20, 22) in the predetermined position, characterised in that there is provided a marking device (40, 42) which marks at least a predetermined region of the shaped member (16), wherein the marking device is arranged on the housing (26) and has two light sources (40, 42) which are uniformly movable towards and away from each other by an actuating means for setting, the marked region.

2. A positioning machine according to claim 1 characterised in that there is provided a manual actuating means (62) for moving the light sources (40, 42).

3. A positioning machine according to claim 1 or claim 2 characterised in that the light sources (40, 42) are fixable.

4. A positioning machine according to one of claims 1 to 3 characterised in that fixed setting positions are predetermined for the light sources (40, 42).

5. A positioning machine according to one of preceding claims 1 to 4 characterised in that there is provided a second marking device (30, 32) which marks a region around the predetermined position.

6. A positioning machine according to claim 5 characterised in that the second marking device is formed by the gripping means (30, 32, 34, 36) which define the region to be marked.

7. A positioning machine according to one of preceding claims 1 to 6 characterised in that the gripping means (30, 32) are provided with replaceable jaws (34, 36).

8. A positioning machine according to claim 7 characterised in that the jaws (34, 36) are replaceable by means of a quick-change system.

9. A positioning machine according to one of preceding claims 1 to 8 characterised in that the gripping means (30, 32, 34, 36) are adapted at least in a region-wise manner to the contour of the connector (20, 22).

## Revendications

1. Machine à positionner (10) pour disposer au moins un raccord (20, 22) dans une position prédéterminée sur un profilé (16), comportant un boîtier (26) déplaçable linéairement dans lequel sont montés de préférence deux moyens de prise (30, 32, 34, 36) déplaçant le raccord (20, 22) dans sa position prédéterminée, comportant une butée (14) pour le profilé (16), qui sert de position de référence pour la commande de mise en place du raccord (20, 22) dans la position déterminée, caractérisée en ce qu'il est prévu un dispositif de marquage (40, 42) qui marque au moins une zone prédéterminée du profilé (16), le dispositif de marquage étant disposé sur le boîtier (26) et comportant deux sources de lumière (40, 42) qui peuvent être déplacées régulièrement par un moyen d'actionnement, l'une vers l'autre et en sens contraire, pour le réglage de la zone marquée.

2. Machine à positionner selon la revendication 1, caractérisée en ce qu'il est prévu un moyen d'actionnement manuel (62) pour le déplacement des sources de lumière (40, 42).

3. Machine à positionner selon la revendication 1 ou 2, caractérisée en ce que les sources de lumière (40, 42) peuvent être bloquées.

4. Machine à positionner selon l'une des revendications 1 à 3, caractérisée en ce que des positions de réglage fixes des sources de lumière (40, 42) sont prédéterminées.

5. Machine à positionner selon l'une des revendications 1 à 4 précédentes, caractérisée en ce qu'il est prévu un deuxième dispositif de marquage (30, 32) qui marque une zone entourant la position prédéterminée.

6. Machine à positionner selon la revendication 5, caractérisée en ce que le deuxième dispositif de marquage est constitué par les moyens de prise (30, 32, 34, 36), qui délimitent la zone à marquer.

7. Machine à positionner selon l'une des revendications 1 à 6 précédentes, caractérisée en ce que les moyens de prise (30, 32) sont équipés de mâchoires (34, 36) échangeables.

8. Machine à positionner selon la revendication 7, caractérisée en ce que les mâchoires (34, 36) sont échangeables au moyen d'un système de changement rapide.

9. Machine à positionner selon l'une des revendications 1 à 8 précédentes, caractérisée en ce que les moyens de prise (30, 32, 34, 36) sont adaptés, au moins par endroits, au contour du raccord (20, 22).
